# EUROPÄISCHE PATENTSCHRIFT

(11) **EP 3 917 728 B1**
(45) Veröffentlichungstag und Bekanntmachung des Hinweises auf die Patenterteilung: **01.06.2022**
(21) Anmeldenummer: 21721022.8
(22) Anmeldetag: 20.04.2021
(51) Int. Cl.: B25J 15/04, B25J 13/08, B25J 19/02

(54) **MODULARER GREIFFINGER, GREIFVORRICHTUNG UND BAUKASTEN**
MODULAR GRIPPING FINGER, GRIPPING DEVICE AND KIT
DOIGT DE PRÉHENSION MODULAIRE, DISPOSITIF DE PRÉHENSION ET KIT

(30) Priorität: 20.04.2020 DE 102020110692
(43) Veröffentlichungstag der Anmeldung: 08.12.2021
(73) Patentinhaber: Schunk GmbH & Co. KG Spann- und Greiftechnik, 74348 Lauffen an Neckar (DE)
(72) Erfinder: FRIEDRICH, Christian, 74831 Gundelsheim (DE); FLEISCHER, Jürgen, 76228 Karlsruhe (DE); FRIEDMANN, Marco, 76185 Karlsruhe (DE)
(74) Vertreter: DREISS Patentanwälte PartG mbB
(86) Internationale Anmeldenummer: PCT/EP2021/060185
(87) Internationale Veröffentlichungsnummer: WO 2021/214030

(56) Entgegenhaltungen:
- WO-A1-2015/139717
- DE-A1- 3 705 884
- JP-A- H06 180 258
- JP-A- 2010 120 140
- US-A1- 2018 141 209

## Beschreibung

Die Erfindung betrifft einen modularen Greiffinger für eine Greifvorrichtung, eine Greifvorrichtung mit einem modularen Greiffinger sowie einen Baukasten zum Bereitstellen eines modularen Greiffingers. Der Greiffinger ist an eine verfahrbare Greiferbacke der Greifvorrichtung anordenbar. Der Greiffinger umfasst wenigstens zwei starr miteinander verbundene Fingermodule, wobei die Fingermodule zumindest ein Basismodul und ein Endmodul umfassen. Das Endmodul weist eine Greiffläche auf, welche als Kontaktfläche zum Kontaktieren eines gegriffenen Teils dient. Das Basismodul bildet im Wesentlichen eine geometrische Form des Greiffingers ab, wobei durch Anordnen unterschiedlicher Basismodule eine unterschiedliche geometrische Form des Greiffingers erzielt wird.

Ein modularer Greiffinger zum Anordnen an eine Greiferbacke einer Greifvorrichtung mit mehreren hintereinander angeordneten Fingermodulen sowie ein zugehöriger Baukasten ist durch das FINGERKIT der Firma Weiss Robotics GmbH & Co. KG, 71640 Ludwigsburg, bekannt (vgl. https://weiss-robotics.com/fingerkit/). Der Greiffinger ist rekonfigurierbar und wird jeweils bauteilspezifisch aus verschiedenen Fingermodulen eines Bausatzes zusammengesetzt, sodass eine Vielzahl von Bauteilen individuell durch den Einsatz unterschiedlich ausgebildeter Greiffinger greifbar ist. Die Fingermodule sind ausschließlich zum Greifen eines Bauteils und zum Herstellen eines Kraftflusses zwischen der Greiffläche und der Greiferbacke vorgesehen.

Ferner ist aus der DE 10 2016 200 492 A1 bekannt, Sensorik zumindest teilweise in einen Greiffinger zu integrieren, wobei der verwendete Greiffinger einstückig und individuell auf die Greifsituation ausgebildet ist. Der Greiffinger ist nicht modular ausgebildet und folglich nicht rekonfigurierbar, sodass bei einer abweichenden Greifsituation ein anderer Greiffinger zum Einsatz kommen muss.

Aus der US 2017/0066142 A1 ist ein zweitteiliger Greiffinger mit einer Spitze und einem Modul bekannt, wobei in der Spitze ein Sensor und im Modul, also innerhalb des Greiffingers, eine elektrische Auswerteeinheit offenbart ist. Ein modularer Greiffinger ist auch aus WO2015/139717 bekannt.

Der Erfindung liegt die Aufgabe zugrunde, einen modularen Greiffinger mit einem integrierten Sensor bereitzustellen, wobei die Auswertung der Sensorsignale auf günstige Art und Weise erfolgen soll

Die Aufgabe wird gelöst durch einen modularen Greiffinger nach Anspruch 1, welcher an eine verfahrbare Greiferbacke einer Greifvorrichtung anbringbar ist. Der Greiffinger umfasst folglich mindestens zwei miteinander verbundene Fingermodule mit wenigstens einem Basismodul und einem Endmodul, wobei die Fingermodule starr, also kraftschlüssig, verliersicher und/oder verdrehsteif, miteinander verbunden sind. Das Endmodul umfasst eine elektrische Endmodulschnittstelle und wenigstens einen mit der Endmodulschnittstelle verbundenen oder verbindbaren Sensor. Der Sensor im Endmodul ist über eine innerhalb des Endmoduls vorgesehenen Leitung mit der Endmodulschnittstelle verbunden oder verbindbar. Die Leitung ist derart vorgesehen, dass vom Sensor erfasste Sensordaten zumindest zur Endmodulschnittstelle übertragen werden können und Energie zum Betreiben des Sensors von der Endmodulschnittstelle zum Sensor übertragen werden kann. Zusätzlich zum Sensor kann ein Aktor im Endmodul vorgesehen sein, wobei über die Leitung eine Verbindung zur Endmodulschnittstelle hergestellt ist. Dabei kann Energie zum Betreiben des Aktors und Daten zur Steuerung des Aktors übertragen werden.

Erfindungsgemäß umfasst jedes Basismodul eine vordere elektrische Schnittstelle, welche der Greiferbacke zugewandt ausgebildet ist, und eine hintere elektrische Schnittstelle, welche der Greiferbacke abgewandt ausgebildet ist. Die Begriffe zugewandt und abgewandt definieren eine örtliche Orientierung, wobei die Fingermodule beginnend bei der Backenschnittstelle eine Kette ausbilden, die mit dem Endmodul als letztes Glied der Kette endet. Somit ist die der Greiferbacke zugewandte Schnittstelle in der Kette vor der der Greiferbacke abgewandten Schnittstelle angeordnet.

Ein Basismodul ist mit seiner hinteren Schnittstelle mit der Endmodulschnittstelle verbindbar. Die Greiferbacke umfasst eine greiferbackenseitige Backenschnittstelle zum Anordnen des Greiffingers. Wenn zwischen der Backenschnittstelle und der Endmodulschnittstelle nur ein Basismodul angeordnet ist, dann besteht der Greiffinger aus zwei Fingermodulen. Mit jedem weiteren angeordneten Basismodul zwischen der Endmodulschnittstelle und der Backenschnittstelle erhöht sich die Anzahl der Fingermodule des Greiffingers um eins. Ferner sind die vordere elektrische Schnittstelle des wenigstens einen Basismoduls und die elektrische Endmodulschnittstelle identisch ausgebildet.

Innerhalb jedes Basismoduls sind jeweils eine oder mehrere Verbindungsleitungen zum Übertragen von Energie und Daten vorgesehen, welche sich jeweils entlang der Länge des Basismoduls bzw. zwischen der vorderen Schnittstelle und der hinteren Schnittstelle erstrecken. Die Verbindungsleitungen aller zwischen der Backenschnittstelle und der Endmodulschnittstelle angeordneten Basismodule bilden eine Durchgangsleitung, in dem jeweils die Verbindungsleitungen zweier unmittelbar hintereinander angeordneter Basismodule über die zwischen diesen beiden vorgesehenen Schnittstellen verbunden sind. Die Durchgangsleitung ist derart ausgebildet, dass Energie zum Betreiben des Sensors und/oder vom Sensor erzeugte Sensordaten zwischen der Backenschnittstelle und der Endmodulschnittstelle übertragbar sind. Zudem kann zusätzlich zu den Daten des Sensors über die Verbindungsleitung bzw. die Durchgangsleitung die Informationen aller gegenwärtig verbauten Fingermodule und zusätzlich deren Reihenfolge in der Kette übertragen werden.

Die Fingermodule umfassen vorzugsweise eine Codierung, sodass einer greiferseitigen Auswerteeinheit und/oder eine übergeordnete Greifsteuerung nach dem Verbinden des Greiffingers mit der Backenschnittstelle die Geometrie und Funktionalität des Greiffingers bekannt ist. Folglich ist der Auswerteeinheit und/oder der Greifsteuerung insbesondere der Nullpunkt des Greiffingers und/oder des Greifers bekannt.

Ein derartiger Greiffinger ermöglicht das Erfassen von Daten ohne Anbringen zusätzlicher Peripherie am Greiffinger. Durch die Anordnung der Verbindungsleitungen innerhalb der Basismodule wird zusätzlich das Risiko eines Verfangens in den Verbindungsleitungen reduziert und der Arbeitsbereich des Greiffingers vergrößert. Ferner kann der Greiffinger individuell durch Anordnen anderer und/oder weiterer Basismodule an den Greiffinger an eine Greifsituation angepasst werden ohne dabei die Funktionalität des Greiffingers hinsichtlich der Datenerfassung zu beeinträchtigen. Ein aus modularen Fingermodulen zusammengesetzter Greiffinger kann beliebige Fingerkinematiken bilden. Außerdem kann beispielsweise der Tausch eines Sensors durch den Tausch des Endmoduls erfolgen, wobei das oder die anderen Basismodule am Greiffinger verbleiben können.

Zudem können die im Greiffinger erfassten Sensordaten mittels der Durchgangsleitung in die Greifbacke übertragen werden, sodass einer greiferseitige Auswerteeinheit die Sensordaten auswerten kann. Folglich ist auch keine weitere Auswerteeinheit im Greiffinger erforderlich, welche zu einer Latenz zwischen den beiden Auswerteeinheiten führen würde.

Vorteilhafterweise umfassen die Fingermodule ein Adaptermodul, wobei das Adaptermodul eine vordere elektrische Schnittstelle und eine hintere elektrische Schnittstelle umfasst. Das Adaptermodul ist mit seiner vorderen elektrischen Schnittstelle mit einer greiferbackenseitigen elektrischen Backenschnittstelle verbindbar. Die vordere elektrische Schnittstelle des Adaptermoduls ist vorzugsweise auf die Greiferbacke und/oder die Backenschnittstelle angepasst. Die hintere elektrische Schnittstelle des Adaptermoduls und die hintere elektrische Schnittstelle (18b) des wenigstens einen Basismoduls (12a, 12b) sind identisch ausgebildet. Das Adaptermodul ist mit seiner hinteren elektrischen Schnittstelle mit der vorderen elektrischen Schnittstelle eines Basismoduls oder mit der Endmodulschnittstelle verbindbar. Das wenigstens eine Basismodul und/oder das Endmodul sind vorzugsweise mittels des Adaptermoduls mit der elektrischen Backenschnittstelle verbindbar. Der modulare Greiffinger umfasst vorzugsweise ein Adaptermodul und ein Endmodul und insbesondere wenigstens ein Basismodul. Demnach kann der modulare Greiffinger an unterschiedliche Backenschnittstellen angeordnet werden. An das Adaptermodul können aufgrund der identischen Ausbildung der hinteren Schnittstellen des Adaptermoduls und des wenigstens einen Basismoduls beliebig viele Basismodule angeordnet werden, um eine Geometrie und/oder Funktionalität des Greiffingers zu gestalten.

Innerhalb des Adaptermoduls ist vorzugsweise eine oder mehrere Verbindungsleitungen zum Übertragen von Energie und Daten vorgesehen, welche sich zwischen der vorderen Schnittstelle und der hinteren Schnittstelle des Adaptermoduls erstreckt. Die Verbindungsleitung des Adaptermoduls erweitert die Durchgangsleitung, in dem die Verbindungsleitung des an dem Adaptermodul angeordneten Basismodul über die zwischen diesen beiden vorgesehenen Schnittstellen verbunden ist.

Alternativ sind jeweils die hintere Schnittstelle der Basismodule und die Backenschnittstelle identisch ausgebildet. Somit können die Basismodule in ihrer Reihenfolge beliebig ausgetauscht werden. Demnach muss an der Backenschnittstelle kein Adaptermodul vorgesehen sein, welche eine an die Backenschnittstelle angepasste vordere Schnittstelle umfasst.

Es ist auch denkbar, dass die vordere Schnittstelle des an der Backenschnittstelle angeordneten Basismoduls an die Backenschnittstelle angepasst ist. In diesem Fall sind für unterschiedliche Backenschnittstellen Adapter-Basismodule vorgesehen, welche an der Backenschnittstelle angeordnet sind. An das Adapter-Basismodul können ein oder mehrere Basismodule bzw. ein Endmodul angeordnet werden. Die vorderen Schnittstellen der weiteren Basismodule, ausgenommen dem Adapter-Basismodul, sind jeweils zur Endmodulschnittstelle identisch ausgebildet. Die hinteren Schnittstellen aller Basismodule sind jeweils identisch ausgebildet.

Eine Weiterentwicklung der Erfindung sieht in einem oder mehreren Basismodulen jeweils einen oder mehrere Sensoren und/oder einen oder mehrere Aktoren vor. Die vorgesehenen Sensoren und/oder Aktoren in einem oder mehreren Basismodulen sind mit der Verbindungsleitung bzw. der Durchgangsleitung verbindbar, sodass eine Verbindung zur Backenschnittstelle herstellbar ist. Dadurch kann die Funktionalität des Greiffingers zusätzlich erweitert werden, insbesondere, wenn für die Erweiterung der Sensorik kein Raum im Endmodul zur Verfügung steht.

Vorteilhafterweise ist wenigstens ein Sensor zur Aufnahme der durch ein gegriffenes Teil auf die Greiffläche wirkenden Greifkraft ausgebildet. Damit kann eine Regelung durch eine Greifsteuerung auf Grundlage der Greifkraft erfolgen. Ferner kann wenigstens ein Sensor die Lage der Greiffläche im Raum erfassen, um eine verbesserte Orientierung des Greiffingers zu ermöglichen. Ferner kann wenigstens ein Sensor den Abstand zwischen der Greiffläche und eines zu greifenden Teils erfassen, sodass ein Anfahren an ein zu greifendes Teil in erhöhter Geschwindigkeit erfolgen kann. Ferner kann wenigstens ein Sensor den Schlupf zwischen der Greiffläche und des gegriffenen Teils erfassen, damit ein Verrutschen des gegriffenen Teils durch die Auswerteeinheit erfasst wird und über eine entsprechende Ansteuerung ein weiteres Verrutschen des gegriffenen Teils durch beispielsweise Erhöhen der Greifkraft verhindert werden kann. Ferner kann wenigstens ein Sensor Umgebungszustände, wie zum Beispiel die Raumtemperatur, die Luftfeuchtigkeit und /oder optische Umgebungsmerkmale erfassen, um die Greifsituation detailliert abbilden zu können. Ferner kann wenigstens ein Sensor zum Identifizieren des zu greifenden und/oder gegriffenen Bauteils ausgebildet sein. Es ist denkbar, dass in einem Sensor eine oder mehrere Funktionen zur Datenerfassung integriert sind, wobei für weitere Funktionen auch mehrere Sensoren Verwendung finden können. Es ist zudem denkbar, dass für eine Funktion auch mehrere Sensoren zum Einsatz kommen.

Eine vorteilhafte Weiterentwicklung des Greiffingers sieht innerhalb eines oder mehrerer Basismodule eine Medienleitung zum Übertragen von Stoffen und oder Medien vor, wobei sich die Medienleitung über die Länge des einen oder der mehreren Basismodule bzw. zwischen der vorderen Schnittstelle und der hinteren Schnittstelle erstreckt. Die vorderen und hinteren Schnittstellen sind dann nicht nur als elektrische Schnittstellen, sondern zusätzlich auch als Medienschnittstellen ausgebildet. Ferner kann auch im Endmodul eine Medienleitung vorgesehen sein. Das Übertragen von Medien ermöglicht das Betreiben von beispielsweise pneumatischen Aktoren, wobei die Druckluft dann durch den Greiffinger dem jeweiligen Aktuator zugeführt wird.

Vorteilhafterweise sind die Basismodule miteinander, mit der Backenschnittstelle und oder mit der Endmodulschnittstelle mittels eines mechanischen Schnellwechselsystem kraftschlüssig miteinander verbindbar. Hierzu kommt beispielsweise das Backenschnellwechselsystem BSWS der Anmelderin oder ein ähnliches Schnellwechselsystem zum Verbinden infrage. Somit ist ein schnelles Öffnen und Schließen der Schnittstelle, bzw. das Verbinden zweier Fingermodule miteinander oder Lösen zweier Fingermodule voneinander möglich. Im verbundenen Zustand wird ein geeigneter Kraftfluss zwischen beiden Fingermodulen erzielt.

Eine vorteilhafte Weiterentwicklung des Greiffingers sieht eine Herstellung der Komponenten für den Greiffinger mittels additiven Fertigungsverfahren vor. Durch additive Fertigungsverfahren sind beliebig komplexe Geometrien der Fingermodule möglich. Zudem können innerhalb des additiven Fertigungsverfahren Sensoren und Aktoren in die Fingermodule eingebettet werden, sodass eine vorteilhafte Struktur der Fingermodule und eine vorteilhafte Anordnung der Sensoren bzw. Aktoren in den Fingermodulen realisierbar sind. Es ist auch denkbar, dass die Sensoren bzw. Aktoren in einem separaten additiven Fertigungsverfahren hergestellt und im Anschluss mit den Fingermodulen montiert werden.

Ferner kann vorteilhaft sein, wenn die Verbindungsleitungen in das bzw. am Basismodul und die Leitung in das bzw. am Endmodul additiv aufgebracht werden. Dies bringt eine hohe Zuverlässigkeit und eine hohe Anpassbarkeit in der Datenübertragung mit sich. Es ist ebenfalls denkbar, dass die Verbindungsleitungen in einem separaten additiven Herstellungsprozess gefertigt und dann mit den Fingermodulen montiert werden.

Eine vorteilhafte Ausbildung des Greiffingers sieht im Endmodul einen Sensor vor, welcher derart ausgebildet ist, dass zur Aufnahme der auf die Greiffläche wirkenden Greifkraft der Federweg einer mit der Greiffläche gekoppelten Feder erfasst wird. Durch den linearen Zusammenhang zwischen einer auf eine Feder wirkenden Kraft und den Federweg der Feder über die Federkonstante ist durch das Messen einer Änderung des Federwegs ein direkter Rückschluss auf die Greifkraft möglich. Zudem ergibt sich eine einfachere und bessere Regelbarkeit des Greifers aufgrund der Nachgiebigkeit in der Greiffläche. Eine derartige Messeinrichtung ist einfach zu gestalten und erlaubt eine kompakte Bauweise eines Endmoduls.

Eine weitere vorteilhafte Ausbildung des Greiffingers sieht vor, dass das Endmodul, das wenigstens eine Basismodul und gegebenfalls das Adaptermodul auswerteeinheitsfrei ausgebildet sind. Die Ausbildung des modularen Greiffingers ist dann derart, dass weder in oder am Endmodul noch in oder an wenigstens einem der Basismodule eine Auswerteeinheit vorgesehen ist, die im Betrieb erzeugte Sensordaten des wenigstens einen Sensors, des Endmoduls und/oder des wenigstens einen Basismoduls verarbeitet. In dem Fall, in dem ein Adaptermodul Verwendung findet, weist auch das Adaptermodul keine derartige Auswerteeinheit auf. Dies hat den Vorteil, dass auch bei Vorsehen von einer Vielzahl von Fingermodulen lediglich eine Auswerteeinheit greiferseitig vorzusehen ist. Damit einher geht ein einfacherer und kostengünstigerer Aufbau der einzelnen Fingermodule.

Die der Erfindung zugrundeliegenden Aufgabe wird ebenfalls durch eine Greifvorrichtung nach Anspruch 12 mit einer Auswerteeinheit, mit wenigstens einer eine Backenschnittstelle aufweisenden Backe und mit wenigstens einem modularen an der Backenschnittstelle angeordneten erfindungsgemäßen Greiffinger gelöst. Die Auswerteeinheit ist dabei in die Greifvorrichtung integriert oder an dieser angeordnet, insbesondere ist die Auswerteeinheit an oder in Greifergehäuse oder der Greiferbacke vorgesehen. An der Greifvorrichtung können zwei Greiferbacken vorgesehen sein, wobei jeweils an einer Greiferbacke ein modularer Greiffinger anbringbar ist. Alternativ können auch nur ein modularer Greiffinger und ein nicht modularer Greiffinger oder eine Gegenfläche an der Greifvorrichtung vorgesehen sein. Die im Betrieb durch den wenigstens einen Sensor erzeugten Sensordaten sind durch die Auswerteeinheit verarbeitbar, sodass eine Regelung der Greifvorrichtung auf Grundlage der erfassten Sensordaten möglich ist.

Vorzugsweise ist der wenigstens eine Sensor mittels der Backenschnittstelle, insbesondere mittels innenliegenden Verbindungsleitungen, mit der Auswerteeinheit verbindbar. Folglich kann der Greiffinger einfach mit der Backenschnittstelle verbunden werden. Auf zusätzliche Peripherie, wie z.B. eine weitere Auswerteeinheit im Greiffinger oder störende Leitungen an der Oberfläche des Greiffingers können so vermieden werden.

Ferner wird die der Erfindung zugrundeliegenden Aufgabe ebenfalls durch einen Baukasten nach Anspruch 14 gelöst, wobei der Baukasten verschiedene Fingermodule umfasst und zum Bereitstellen eines erfindungsgemäßen Greiffingers dient. Die im Baukasten enthaltenen Fingermodule sind in unterschiedlichen Formen, Größen und Materialien vorgesehen, sodass ein Benutzer den Greiffinger auf Grundlage der Greifsituation individuell zusammenbauen kann und ferner ein Basismodul und/oder Endmodul mit dem geeigneten Sensor und/oder Aktor auswählen kann.

Weitere Einzelheiten und Ausgestaltungen der Erfindung sind der nachfolgenden Beschreibung, in der Ausführungsbeispiele der Erfindung näher beschrieben sind, zu entnehmen.

Es zeigt:
- Fig. 1: schematische Darstellung eines an einer Greiferbacke angeordneten Greiffingers mit zwei Fingermodulen,
- Fig. 2: schematische Darstellung eines zu Fig. 1 alternativen an einer Greiferbacke angeordneten Greiffingers mit zwei Fingermodulen,
- Fig. 3: schematische Darstellung eines an den Greiffinger der Fig. 1 oder Fig. 2 anbringbaren Endmoduls mit zwei Sensoren und austauschbarer Greiffläche,
- Fig. 4: schematische Darstellung eines an den Greiffinger der Fig. 1 oder Fig. 2 anbringbaren Basismoduls mit einem Sensor,
- Fig. 5: schematische Darstellung eines an den Greiffinger der Fig. 1 oder Fig. 2 anbringbaren Endmoduls mit einem Sensor zur Aufnahme der Greifkraft durch Erfassen eines Federwegs,
- Fig. 6: schematische Darstellung eines zu Fig. 5 alternativen an den Greiffinger der Fig. 1 oder Fig. 2 anbringbaren Endmoduls mit einem Sensor zur Aufnahme der Greifkraft mittels Erfassens eines Federwegs, und
- Fig. 7: schematische Darstellung eines an einer Greiferbacke angeordneten Greiffingers mit drei Fingermodulen, umfassend ein Adaptermodul, ein Basismodul und ein Endmodul.

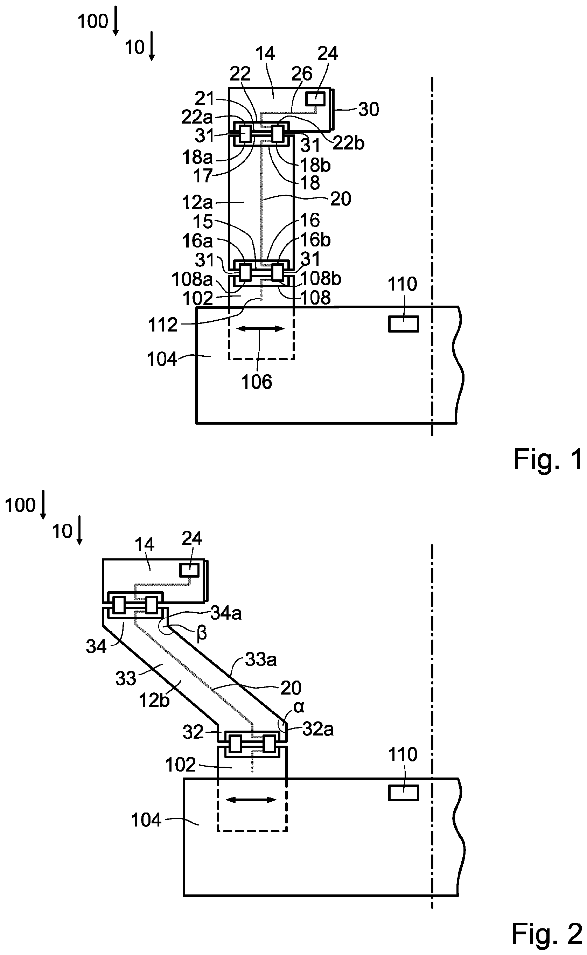

In der Fig. 1 ist die linke Hälfte einer Greifvorrichtung 100 mit einer Greiferbacke 102 gezeigt, wobei die gesamte Greifvorrichtung 100 zwei aufeinander zu und voneinander weg bewegbare Greiferbacken 102 aufweist. An den Greiferbacken 102 ist jeweils eine Backenschnittstelle 108 vorgesehen an der jeweils ein modularer Greiffinger 10 mit wenigstens zwei starr miteinander verbundenen Fingermodulen 12a, 12b, 14, 14a, 14b angeordnet ist. Die Fingermodule 12a, 12b, 14, 14a, 14b werden dabei von einem eine Greiffläche 30 aufweisenden Endmodul 14, 14a, 14b und einem oder mehreren Basismodulen 12a, 12b zum Ausbilden einer geometrischen Form des Greiffingers 10 gebildet.

Die Greiferbacke 102 ist teilweise innerhalb und teilweise außerhalb eines Greifergehäuses 104 angeordnet. Innerhalb des Greifergehäuses 104 ist die Greiferbacke 102 in zwei Richtungen entlang einer Geraden spielfrei verschiebbar. Die Bewegungsrichtung 106 der Greiferbacke 102 ist durch den Doppelpfeil dargestellt. Die Greiferbacke 102 weist an der dem Greifergehäuse 104 abgewandten Seite eine Backenschnittstelle 108 auf, wobei die Backenschnittstelle 108 ein mechanisches Schnellwechselsystem 108a und eine elektrische Schnittstelle 108b umfasst.

Das Basismodul 12a ist als länglicher Quader mit einer quadratischen Grundfläche ausgebildet. Es sind weitere Formen im Querschnitt und der Längserstreckung des Basismoduls 12a denkbar. Das Basismodul 12a umfasst an einer vorderen Grundfläche 15 eine vordere Schnittstelle 16 mit einem mechanischem Schnellwechselsystem 16a und einer elektrischen Schnittstelle 16b. Die vordere Schnittstelle 16 wirkt dabei mit der Backenschnittstelle 108 zusammen, wobei jeweils die mechanischen Schnellwechselsysteme 16a und 108a zusammenwirken sowie die elektrischen Schnittstellen 16b und 108b zusammenwirken. Die mechanischen Schnellwechselsysteme 16a, 108a dienen dazu das Basismodul 12a verliersicher an der Backenschnittstelle 108 anzuordnen und eine starre Verbindung zwischen dem Basismodul 12a und der Greiferbacke 102 herzustellen. Die elektrischen Schnittstellen 16b und 108b dienen zum Übertragen von Energie und Daten.

Ferner umfasst das Basismodul 12a an einer hinteren Grundfläche 17 eine hintere Schnittstelle 18 mit einem mechanischem Schnellwechselsystem 18a und einer elektrischen Schnittstelle 18b.

Innerhalb des Basismoduls 12a ist zwischen der vorderen elektrischen Schnittstelle 16b und der hinteren elektrischen Schnittstelle 18b eine Verbindungsleitung 20 vorgesehen, sodass die vordere elektrische Schnittstelle 16b mit der hinteren elektrischen Schnittstelle 18b hinsichtlich der Übertragung von Energie, Daten und/oder Medien verbunden ist. Die Verbindungsleitung 20 umfasst eine oder mehrere Leitungsstränge und kann einen oder mehrere Sensoren 24 und/oder einen oder mehrere Aktoren 24 versorgen. Die Verbindungsleitung 20 ist vollständig innerhalb des Basismodul 12a angeordnet, wobei alternativ die Verbindungsleitung 20 zumindest im Wesentlichen innerhalb des Basismoduls 12a, also vom Basismodul 12a umschlossen, anzuordnen ist.

Das Endmodul 14 ist ebenfalls als länglicher Quader mit einer quadratischen Grundfläche ausgebildet und umfasst an einer Seitenfläche 21 des Quaders eine Endmodulschnittstelle 22 mit einem mechanischem Schnellwechselsystem 22a und einer elektrischen Schnittstelle 22b. Die Endmodulschnittstelle 22 wirkt mit der hinteren Schnittstelle 18 des Basismodul 12a zusammen, wobei jeweils die mechanischen Schnellwechselsysteme 18a, 22a zusammenwirken und die elektrischen Schnittstellen 18b und 22b zusammenwirken. Die mechanischen Schnellwechselsysteme 18a, 22a dienen dazu das Endmodul 14 verliersicher an der hinteren Schnittstelle 18 des Basismoduls 12a anzuordnen und eine starre Verbindung zwischen dem Basismodul 12a und dem Endmodul 14 herzustellen. Folglich sind sowohl das Endmodul 14 als auch das Basismodul 12a starr mit der Greiferbacke 102 verbunden. Die elektrischen Schnittstellen 18b und 22b dienen zum Übertragen von Energie und Daten.

Innerhalb des Endmoduls 14 ist ein Sensor 24 vorgesehen. Der Sensor 24 ist über eine Leitung 26 mit der elektrischen Endmodulschnittstelle 22b verbunden. Die Leitung 26 ist analog zur Verbindungsleitung 20 zum Übertragen von Energie, Daten und/oder Medien ausgebildet. Die Verbindungsleitung 20 des einen Basismoduls 12a oder die Verbindungsleitungen 20 mehrerer hintereinander angeordneter Basismodule 12a bilden eine Durchgangsleitung 28, welche in Verbindung mit der Leitung 26 des Endmoduls 14 den Sensor 24 mit der elektrischen Backenschnittstelle 108b verbindet. Folglich kann der Sensor 24 mit Energie versorgt werden und dessen Sensordaten über die Leitung 26 und die Durchgangsleitung 28 zur elektrischen Backenschnittstelle 108b übertragen werden. Die erzeugten Sensordaten können weiter in greiferseitigen Leitungen 112, welche gestrichelt dargestellt sind, übertragen und in einer Auswerteeinheit 110 verarbeitet werden und somit zur Steuerung und/oder Regelung mittels einer übergeordneten Greifsteuerung der Greifvorrichtung 100, insbesondere der Greifkraft und - position, Verwendung finden.

Ferner umfasst das Endmodul 14 eine Greiffläche 30, welche zum Greifen eines Teils vorgesehen ist. Zum Greifen des Teils werden in der Greifvorrichtung 100 der Fig. 1 die Greiferbacken 102 aufeinander zu oder voneinander wegbewegt bis jeweils die Greifflächen 30 auf dem zu greifenden Teil aufliegen und ein Kraftfluss zwischen beiden Greiferbacken 102 durch die Greiffinger 10 und das zu greifende Teil hergestellt ist. Die Greiffläche 30 ist einstückig mit dem Endmodul 14 ausgebildet. Die Greiffläche 30 kann alternativ als separates Bauteil vorgesehen sein, insbesondere dann, wenn eine austauschbare Greiffläche 30 mit unterschiedlichen Materialien erforderlich ist. Für eine optimale Greifwirkung ist die Greiffläche 30 aus einem weichen, formstabilen Material mit hohem Reibwert ausgebildet, wobei jedes andere Material ebenfalls denkbar ist.

Im Bereich der Schnittstellen 16, 18 zweier unmittelbar hintereinander angeordneter Basismodule 12a weisen die Basismodule 12a im Wesentlichen den gleichen Querschnitt auf und bilden an den zueinander zugewandten Grundflächen 15, 17 jeweils teilweise eine Fläche, welche parallel zueinander ausgebildet ist. Dies gilt analog für die Seitenfläche 21 des Endmoduls 14 und der hinteren Grundfläche 17 des dem am Endmodul 14 angeordneten Basismoduls 12a. Die Schnittstellen 108 und 16 sowie 18 und 22 umfassen einen Stecker als elektrische Schnittstelle 108b, 16b, 18b, 22b, wobei an der elektrischen Backenschnittstelle 108b bzw. an der vorderen elektrischen Schnittstelle 16b ein positiver bzw. negativer Stecker vorgesehen ist. Die hintere elektrische Schnittstelle 18b und die elektrische Endmodulschnittstelle 22b sind dazu analog ausgebildet. Alternativ können jeweils beide Schnittstellen 108b, 16b; 18b, 22b negativ ausgebildet sein und zur Verbindung ein Zwischenelement 31 vorgesehen sein.

Hinsichtlich der mechanischen und elektrischen Schnittstelle ist auch eine Kombination beider Alternativen möglich.

Die elektrischen Schnittstellen 108b, 16b, 18b, 22b sind beispielsweise durch Vorsehen einer weiteren Schnittstelle für Medien insoweit erweiterbar, dass die Schnittstellen 108b, 16b, 18b, 22b jeweils komplementär an der elektrischen Backenschnittstelle 108b und der vorderen elektrischen Schnittstelle 16b auszubilden sind sowie an der elektrischen Endmodulschnitte 22b und der hinteren elektrischen Schnittstelle 18b auszubilden sind. Dies gilt gleichbeutend für mehrere hintereinander angeordnete Basismodule 12a und deren vordere und hintere elektrische Schnittstelle 16b, 18b zueinander. Zudem ist der Greiffinger 10 der Fig. 1 durch beliebig viele weitere zwischen der Backenschnittstelle 108 und der Endmodulschnittstelle 22 anordenbaren Basismodule 12a erweiterbar. Für eine verbesserte Handhabbarkeit sind die Kanten der Fingermodule 12a, 14 mit einer Fase im Wesentlichen von 45° ausgebildet.

In Fig. 2 ist ein weiterer Greiffinger 10 dargestellt, wobei sich dieser vom Greiffinger 10 der Fig. 1 durch ein anderes Basismodul 12b unterscheidet. Das Basismodul 12b ist doppeltgewinkelt ausgebildet und umfasst einen vorderen Bereich 32, einen hinteren Bereich 34 sowie einen zwischen dem vorderen Bereich 32 und dem hinteren Bereich 34 angeordneten mittleren Bereich 33, wobei das Basismodul 12b einstückig ausgebildet ist. Im vorderen Bereich 32 ist die vordere Schnittstelle 16 und im hinteren Bereich 34 ist die hintere Schnittstelle 18 vorgesehen. Das Basismodul 12b weist über dessen gesamte Längserstreckung eine quadratische Querschnittsfläche auf, wobei die Kanten 32a, 34a des Basismoduls 12b im vorderen Bereich 32 und im hinteren Bereich 34 parallel zueinander verlaufen. Die Kante 33a des Basismoduls 12b im mittleren Bereich 33a schließt mit der Kante 32a einen Winkel α ein, welcher im Bereich zwischen 90° und 180° liegt, und vorzugsweise im Bereich von 135° liegt. Die Kante 33a schließt mit der Kante 34a einen Winkel β ein, welcher im Bereich zwischen 180° und 270° liegt, und vorzugsweise im Bereich von 215° liegt.

Es sind ferner Fingermodule 12a, 12b, 14 mit beliebigen Formen denkbar, wobei auch die Schnittstellen 16, 18 der Basismodule 12a, 12b an der Seitenfläche 32, 33, 34 des Basismoduls 12a, 12b und die Endmodulschnittstelle 22 an der Grundfläche 23 des Endmoduls angeordnet sein können.

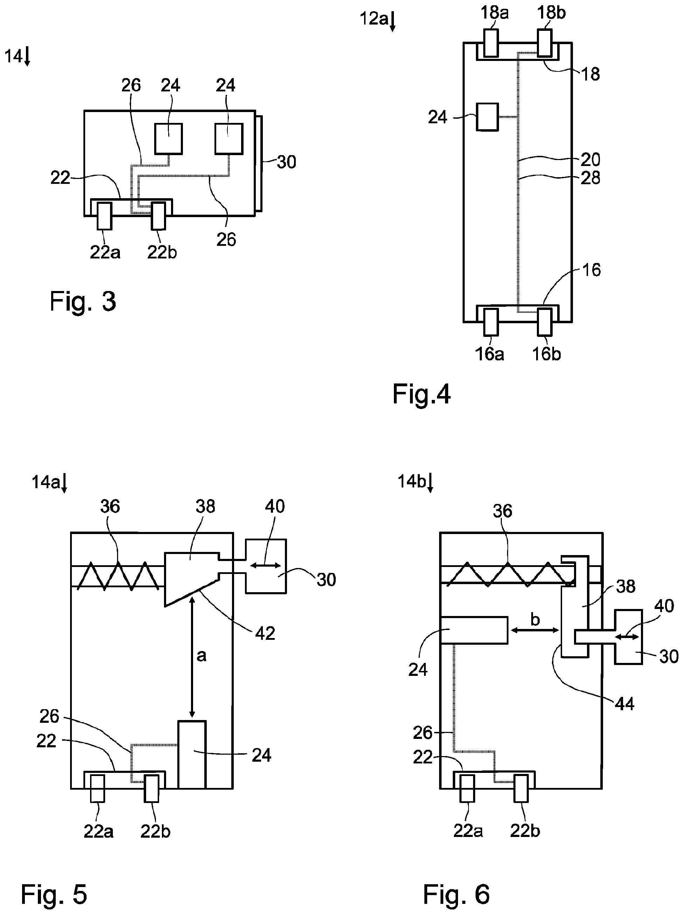

Die Fig. 3 zeigt ein Endmodul 14 mit zwei Sensoren 24. Die Sensoren 24 sind jeweils über eine Leitung 26 mit der Endmodulschnittstelle 22 verbunden. Durch den Einsatz eines Endmoduls 14 gemäß Fig. 3 ist bspw. gleichzeitig die Überwachung des Schlupfs zwischen der Greiffläche 30 und des gegriffenen Teils sowie die Identifizierung des gegriffenen Teils durch zwei unterschiedliche Sensoren 24 möglich.

Die Fig. 4 zeigt ein Basismodul 12a mit einem Sensor 24. Der Sensor 24 ist in das Basismodul 12a integriert und mit der Verbindungsleitung 20 verbunden. Das Vorsehen eines Sensors 24 in einem der Basismodule 12a kann sinnvoll sein, wenn im verwendeten Endmodul 14 kein Platz für einen weiteren Sensor 24 ist und die Funktionalität des Greiffingers 10 trotzdem erweitert werden soll. Ferner kann der Ort zur Aufnahme von geeigneten Daten an einem beliebigen Ort in der Greiferkinematikstruktur, z.B. in einem Basismodul 12a, liegen, sodass ebenfalls das Anordnen eines Sensors 24 in einem der Basismodule 12a als sinnvoll anzusehen ist.

In den Fig. 5 und 6 ist jeweils ein Endmodul 14a, 14b mit einer integrierten Messeinrichtung dargestellt. In den Endmodulen 14a, 14b sind jeweils ein Sensor 24 zur Bestimmung der auf die Greiffläche 30 wirkenden Greifkraft und eine mit der Greiffläche 30 gekoppelten Feder 36 vorgesehen. Zur Bestimmung der Greifkraft wird die Positionsänderung eines ebenfalls mit der Greiffläche gekoppelten Messabschnitts 38 erfasst. Die Positionsänderung des Messabschnitts 38 erfolgt dabei entlang der Bewegungsrichtung 40 der Greiffläche 30. Da sowohl der Messabschnitt 38 als auch die Greiffläche 30 mit der Feder 36 gekoppelt sind, kann beispielsweise die Auswerteeinheit 110 der Greifvorrichtung 100 der Fig. 1 über die Positionsänderung des Messabschnitts 38 in Verbindung mit dem linearen Zusammenhang zwischen dem Federweg der Feder 36 und der Federkraft der Feder 36 die auf die Greiffläche 30 wirkende Greifkraft bestimmen. Die Endmodule 14a, 14b der Fig. 5 und 6 unterscheiden sich hinsichtlich ihrer Messanordnung.

In der Fig. 5 umfasst das Endmodul 14a einen Messabschnitt 38, welcher im Wesentlichen koaxial zur Feder 36 ausgebildet ist, wobei der Sensor 24 orthogonal zur Feder angeordnet ist. Am Messabschnitt 38 ist auf der dem Sensor 24 zugewandten Seite eine Messschräge 42 vorgesehen. Wenn nun eine höhere Greifkraft auf die Greiffläche 30 wirkt, wird die Greiffläche 30 zum Endmodul 14a und der Messabschnitt 38 entgegen der Feder 36 gedrängt. Der Sensor 24 erfasst die Veränderung des Abstands a zwischen dem Sensor 24 und des Messabschnitts 38 aufgrund der vorgesehenen Messschräge 42, wodurch die Auswerteeinheit 110 die auf die Greiffläche 30 wirkende Greifkraft bestimmt.

In der Fig. 6 sind im Endmodul 14b eine Feder 36 und eine Greiffläche 30 mit zueinander parallelen Achsen vorgesehen, wobei die Greiffläche 30 über den Messabschnitt 38 mit der Feder 36 gekoppelt ist. Eine erhöhte Greifkraft drängt die Greiffläche 30 zum Endmodul 14b, womit eine Bewegung des Messabschnitts 38 zum Sensor 24 einhergeht. Der Sensor 24 ist ebenfalls parallel zur Achse der Feder 36 ausgerichtet und misst den Abstand a zu einer senkrecht zur Achse der Feder angeordneten Messfläche 44 des Messabschnitts 38. Die Auswerteeinheit 110 bestimmt mittels der Positionsänderung des Messabschnitts 38 die auf die Greiffläche 30 wirkende Greifkraft.

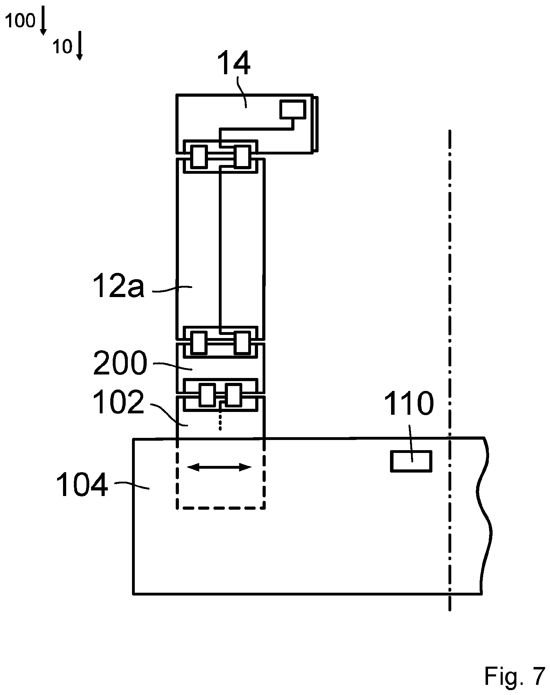

In der Fig. 7 ist eine Greifvorrichtung 100 gezeigt, wobei die Greiferbacke 102 eine Backenschnittstelle 108 aufweist, welche nicht mit den hinteren elektrischen Schnittstellen 18 der Basismodule 12a, 12b identisch ist. Demnach können die Basismodule 12a, 12b mit ihrer vorderen Schnittstelle 16 nicht unmittelbar an der Backenschnittstelle 108 angeordnet werden. Folglich ist ein Adaptermodul 200 an der Backenschnittstelle 108 bzw. zwischen der Backenschnittstelle 108 und Basismodule 12a angeordnet. Das Adaptermodul 200 dient zur Übersetzung der Schnittstellen, sodass mittels des Adaptermoduls 200 ein Basismodul 12a, 12b oder ein Endmodul 14 mit der Backenschnittstelle 108 verbunden werden kann.

Die in den Figuren gezeigten Greiffinger 10 sind auswerteeinheitsfrei ausgebildet. Die Auswerteeinheit 110 ist im Greifergehäuses 104 vorgesehen. Alternativ ist denkbar, dass sie in der Greiferbacke 102 vorgesehen ist. Die Auswerteeinheit 110 dient zur Auswertung und Verarbeitung der im Betrieb erzeugten Sensordaten. Die ausgewerteten und verarbeiteten Sensordaten werden von einer übergeordneten Greifsteuerung abgerufen bzw. an sie übermittelt.

## Patentansprüche

1. Modularer Greiffinger (10) zum Anordnen an eine verfahrbare Greiferbacke (102) einer Greifvorrichtung (100), mit wenigstens zwei starr miteinander verbundenen Fingermodulen (12a, 12b, 14, 14a, 14b), wobei die Fingermodule (12a, 12b, 14, 14a, 14b) ein oder mehrere Basismodule (12a, 12b) zum Ausbilden einer geometrischen Form des Greiffingers (10) und ein eine Greiffläche (30) aufweisendes Endmodul (14, 14a, 14b) umfassen, wobei das Endmodul (14, 14a, 14b) eine elektrische Endmodulschnittstelle (22b) und wenigstens einen mit der Endmodulschnittstelle (22b) verbundenen oder verbindbaren Sensor (24) umfasst,
wobei jedes Basismodul (12a, 12b) eine der Greiferbacke (102) zugewandte, vordere elektrische Schnittstelle (16b) und eine der Greiferbacke (102) abgewandte, hintere elektrische Schnittstelle (18b) umfasst,
wobei das wenigstens eine Basismodul (12a, 12b) mit seiner hinteren elektrischen Schnittstelle (18b) mit der elektrischen Endmodulschnittstelle (22b) verbindbar ist, wobei innerhalb jedes Basismoduls (12a, 12b) jeweils zwischen der vorderen elektrischen Schnittstelle (16b) und der hinteren elektrischen Schnittstelle (18b) eine oder mehrere Verbindungsleitungen (20) zum Übertragen von Energie und Daten vorgesehen sind,
wobei die miteinander über die elektrischen Schnittstellen (16b, 18b) verbundenen Verbindungsleitungen (20) eine Durchgangsleitung (28) derart bilden, dass Energie zum Betreiben des Sensors (24) und/oder vom Sensor (24) erzeugte Sensordaten zwischen der elektrischen Backenschnittstelle (108b) und der elektrischen Endmodulschnittstelle (22b) übertragbar sind, und
**dadurch gekennzeichnet, dass** jeweils die vordere elektrische Schnittstelle (16b) und die elektrische Endmodulschnittstelle (22b) identisch ausgebildet sind.

2. Modularer Greiffinger (10) nach Anspruch 1, wobei die Fingermodule (12a, 12b, 14, 14a, 14b) ferner ein Adaptermodul (200) umfassen, wobei das Adaptermodul (200) eine vordere elektrische Schnittstelle und eine hintere elektrische Schnittstelle umfasst, wobei das Adaptermodul (200) mit seiner vorderen elektrischen Schnittstelle mit einer greiferbackenseitigen elektrischen Backenschnittstelle (108b) verbindbar ist, wobei die hintere elektrische Schnittstelle des Adaptermoduls (200) und die hintere elektrische Schnittstelle (18b) des wenigstens einen Basismoduls (12a, 12b) identisch ausgebildet ist.

3. Modularer Greiffinger (10) nach Anspruch 1, wobei jeweils die hintere elektrische Schnittstelle (18b) und die elektrische Backenschnittstelle (108b) identisch ausgebildet sind.

4. Modularer Greiffinger (10) nach Anspruch 1 oder 2, wobei ein oder mehrere Basismodule (12a, 12b) jeweils einen oder mehrere Sensoren (24) und/oder einen oder mehrere Aktoren (24) aufweisen.

5. Modularer Greiffinger (10) nach einem der vorhergehenden Ansprüche, wobei der wenigstens eine Sensor (24) zur Identifikation eines gegriffenen oder zu greifenden Teils, zur Aufnahme der durch ein gegriffenes Teil auf die Greiffläche (30) wirkenden Greifkraft, der Lage der Greiffläche (30) im Raum, des Abstands zwischen der Greiffläche (30) und eines zu greifenden Teils, des Schlupfs zwischen der Greiffläche (30) und des gegriffenen Teils und/oder der Umgebungszustände, insbesondere der Temperatur, der Luftfeuchtigkeit und/oder optischen Umgebungsmerkmalen, ausgebildet ist.

6. Modularer Greiffinger (10) nach einem der vorhergehenden Ansprüche, wobei innerhalb eines oder mehrerer Basismodule (12a, 12b) an der vorderen elektrischen Schnittstelle (16) und an der hinteren elektrischen Schnittstelle (18) jeweils eine Medienschnittstelle vorgesehen ist und dass zwischen den Medienschnittstellen eine Medienleitung zum Übertragen von Stoffen und/oder Medien vorgesehen ist.

7. Modularer Greiffinger (10) nach einem der vorhergehenden Ansprüche, wobei die Basismodule (12a, 12b) miteinander, mit der elektrischen Backenschnittstelle (108) und mit der elektrischen Endmodulschnittstelle (22) mittels eines mechanischen Schnellwechselsystems (108a, 16a, 18a, 22a) kraftschlüssig verbindbar sind.

8. Modularer Greiffinger (10) nach einem der vorhergehenden Ansprüche, wobei wenigstens ein Sensor (24) und/oder wenigstens ein Aktor (24) durch Integration in einem additiven Fertigungsverfahren in die Fingermodule (12a, 12b, 14, 14a, 14b) eingebettet sind.

9. Modularer Greiffinger (10) nach einem der vorhergehenden Ansprüche, wobei die Verbindungsleitungen (20) in einem additiven Fertigungsverfahren hergestellt sind.

10. Modularer Greiffinger (10) nach einem der vorhergehenden Ansprüche, wobei ein Sensor (24) im Endmodul (14, 14a, 14b) derart ausgebildet ist, dass zur Aufnahme der auf die Greiffläche (30) wirkenden Greifkraft der Federweg einer mit der Greiffläche (30) gekoppelten Feder (36) erfasst wird.

11. Modularer Greiffinger (10) nach einem der vorhergehenden Ansprüche, wobei das Endmodul (14, 14a, 14b) und das wenigstens eine Basismodul (12a, 12b) auswerteeinheitsfrei ausgebildet sind.

12. Greifvorrichtung (100) mit einer Auswerteeinheit (110), mit wenigstens einer eine Backenschnittstelle (108) aufweisenden Backe (102) und mit wenigstens einem an der Backenschnittstelle (108) angeordneten modularen Greiffinger (10) nach einem der Ansprüche 1 bis 10, wobei die Auswerteeinheit (110) in die Greifvorrichtung integriert oder an dieser angeordnet ist, und
wobei die im Betrieb erzeugten Sensordaten des wenigstens einen Sensors (24) des wenigstens einen Greiffingers (10) von der Auswerteeinheit (110) verarbeitet werden.

13. Greifvorrichtung (100) nach Anspruch 12, wobei der wenigstens eine Sensor (24) mittels der Backenschnittstelle (108) mit der Auswerteeinheit (110) verbindbar ist.

14. Baukasten zum Bereitstellen eines Greiffingers (10) nach einem der Ansprüche 1 bis 11 mit verschiedenen Fingermodulen (12a, 12b, 14, 14a, 14b),
wobei die Fingermodule (12a, 12b, 14, 14a, 14b) in unterschiedlichen Formen, Größen und Materialien vorgesehen sind.

## Claims

1. Modular gripping finger (10) for arrangement on a movable gripper jaw (102) of a gripping device (100), having at least two rigidly interconnected finger modules (12a, 12b, 14, 14a, 14b), the finger modules (12a, 12b, 14, 14a, 14b) comprising one or more base modules (12a, 12b) for forming a geometric shape of the gripping finger (10) and comprising an end module (14, 14a, 14b) having a gripping surface (30), the end module (14, 14a, 14b) comprising an electrical end module interface (22b) and at least one sensor (24) which is or can be connected to the end module interface (22b), each base module (12a, 12b) comprising a front electrical interface (16b) nearer the gripper jaw (102) and a rear electrical interface (18b) further away from the gripper jaw (102), the at least one base module (12a, 12b) being connectable via its rear electrical interface (18b) to the electrical end module interface (22b), one or more connecting lines (20) for transmitting energy and data being provided within each base module (12a, 12b) between the front electrical interface (16b) and the rear electrical interface (18b) in each case, the connecting lines (20) interconnected via the electrical interfaces (16b, 18b) forming a through line (28) such that energy for operating the sensor (24) and/or sensor data generated by the sensor (24) can be transmitted between the electrical jaw interface (108b) and the electrical end module interface (22b), and
**characterized in that** the front electrical interface (16b) and the electrical end module interface (22b) are identical in each case.

2. Modular gripping finger (10) according to claim 1, wherein the finger modules (12a, 12b, 14, 14a, 14b) further comprise an adapter module (200), wherein the adapter module (200) comprises a front electrical interface and a rear electrical interface, wherein the adapter module (200) can be connected via its front electrical interface to an electrical jaw interface (108b) on the gripper jaw side, wherein the rear electrical interface of the adapter module (200) and the rear electrical interface (18b) of the at least one base module (12a, 12b) are identical.

3. Modular gripping finger (10) according to claim 1, wherein the rear electrical interface (18b) and the electrical jaw interface (108b) are identical.

4. Modular gripping finger (10) according to claim 1 or claim 2, wherein one or more base modules (12a, 12b) each has one or more sensors (24) and/or one or more actuators (24).

5. Modular gripping finger (10) according to any of the preceding claims, wherein the at least one sensor (24) is designed for identifying a part that is gripped or to be gripped and for recording the gripping force exerted on the gripping surface (30) by a gripped part, the position of the gripping surface (30) in space, the distance between the gripping surface (30) and a part to be gripped, the slippage between the gripping surface (30) and the gripped part, and/or the environmental conditions, in particular the temperature, the humidity and/or optical environmental features.

6. Modular gripping finger (10) according to any of the preceding claims, wherein a media interface is provided within one or more base modules (12a, 12b) at the front electrical interface (16) and at the rear electrical interface (18) in each case and wherein a media line for transferring substances and/or media is provided between the media interfaces.

7. Modular gripping finger (10) according to any of the preceding claims, wherein the base modules (12a, 12b) can be frictionally connected to one another, to the electrical jaw interface (108), and to the electrical end module interface (22) by means of a mechanical quick-change system (108a, 16a, 18a, 22a).

8. Modular gripping finger (10) according to any of the preceding claims, wherein at least one sensor (24) and/or at least one actuator (24) are embedded in the finger modules (12a, 12b, 14, 14a, 14b) by means of integration in an additive manufacturing process.

9. Modular gripping finger (10) according to any of the preceding claims, wherein the connecting lines (20) are produced in an additive manufacturing process.

10. Modular gripping finger (10) according to any of the preceding claims, wherein a sensor (24) in the end module (14, 14a, 14b) is designed in such a way that the spring travel of a spring (36) coupled to the gripping surface (30) is detected in order to record the gripping force acting on the gripping surface (30).

11. Modular gripping finger (10) according to any of the preceding claims, wherein the end module (14, 14a, 14b) and the at least one base module (12a, 12b) are designed without evaluation units.

12. Gripping device (100) comprising an evaluation unit (110), comprising at least one jaw (102) having a jaw interface (108) and comprising at least one modular gripping finger (10) according to any of claims 1 to 10 arranged at the jaw interface (108), wherein the evaluation unit (110) is integrated into the gripping device or is arranged thereon, and wherein the sensor data, generated during operation, of the at least one sensor (24) of the at least one gripping finger (10) are processed by the evaluation unit (110).

13. Gripping device (100) according to claim 12, wherein the at least one sensor (24) can be connected to the evaluation unit (110) by means of the jaw interface (108).

14. Construction kit for providing a gripping finger (10) according to any of claims 1 to 11 with different finger modules (12a, 12b, 14, 14a, 14b), wherein the finger modules (12a, 12b, 14, 14a, 14b) are provided in different shapes, sizes, and materials.

## Revendications

1. Doigt de préhension (10) modulaire à disposer sur une mâchoire de pince (102) déplaçable d'un dispositif de préhension (100), avec au moins deux modules de doigt (12a, 12b, 14, 14a, 14b) reliés rigidement l'un à l'autre, dans lequel les modules de doigt (12a, 12b, 14, 14a, 14b) comprennent un ou plusieurs modules de base (12a, 12b) pour la réalisation d'une forme géométrique du doigt de préhension (10) et un module d'extrémité (14, 14a, 14b) présentant une surface de préhension (30), dans lequel le module d'extrémité (14, 14a, 14b) comprend une interface de module d'extrémité (22b) électrique et au moins un capteur (24) relié ou pouvant être relié à l'interface de module d'extrémité (22b),
dans lequel
chaque module de base (12a, 12b) comprend une interface électrique avant (16b) tournée vers la mâchoire de pince (102) et une interface électrique arrière (18b) opposée à la mâchoire de pince (102),
dans lequel le au moins un module de base (12a, 12b) peut être relié à l'interface de module d'extrémité (22b) électrique avec son interface électrique arrière (18b),
dans lequel une ou plusieurs lignes de liaison (20) pour transmettre de l'énergie et des données sont prévues à l'intérieur de chaque module de base (12a, 12b) respectivement entre l'interface électrique avant (16b) et l'interface électrique arrière (18b),
dans lequel les lignes de liaison (20) reliées les unes aux autres par l'intermédiaire des interfaces électriques (16b, 18b) forment une ligne de passage (28), de telle sorte que de l'énergie pour faire fonctionner le capteur (24) et/ou des données de capteur produites par le capteur (24) peuvent être transmises entre l'interface de mâchoire électrique (108b) et l'interface de module d'extrémité (22b) électrique, et
**caractérisé en ce que**
respectivement l'interface électrique avant (16b) et l'interface de module d'extrémité (22b) électrique sont réalisées de manière identique.

2. Doigt de préhension (10) modulaire selon la revendication 1, dans lequel les modules de doigt (12a, 12b, 14, 14a, 14b) comprennent en outre un module d'adaptateur (200), dans lequel le module d'adaptateur (200) comprend une interface électrique avant et une interface électrique arrière, dans lequel le module d'adaptateur (200) peut être relié à une interface de mâchoire électrique (108b) côté mâchoire de pince avec son interface électrique avant, dans lequel l'interface électrique arrière du module d'adaptateur (200) et l'interface électrique arrière (18b) du au moins un module de base (12a, 12b) sont réalisées de manière identique.

3. Doigt de préhension (10) modulaire selon la revendication 1, dans lequel respectivement l'interface électrique arrière (18b) et l'interface de mâchoire électrique (108b) sont réalisées de manière identique.

4. Doigt de préhension (10) modulaire selon la revendication 1 ou 2, dans lequel un ou plusieurs modules de base (12a, 12b) présentent respectivement un ou plusieurs capteurs (24) et/ou un ou plusieurs actionneurs (24).

5. Doigt de préhension (10) modulaire selon l'une quelconque des revendications précédentes, dans lequel le au moins un capteur (24) est réalisé pour l'identification d'une pièce saisie ou à saisir, pour l'enregistrement de la force de préhension agissant sur la surface de préhension (30) par l'intermédiaire d'une pièce saisie, de la position de la surface de préhension (30) dans l'espace, de la distance entre la surface de préhension (30) et une pièce à saisir, du glissement entre la surface de préhension (30) et la pièce saisie et/ou des conditions ambiantes, en particulier de la température, de l'humidité de l'air et/ou des caractéristiques ambiantes.

6. Doigt de préhension (10) modulaire selon l'une quelconque des revendications précédentes, dans lequel respectivement une interface de milieux est prévue à l'intérieur d'un ou plusieurs modules de base (12a, 12b) sur l'interface électrique avant (16) et sur l'interface électrique arrière (18) et qu'une conduite de milieux pour la transmission de substances et/ou milieux est prévue entre les interfaces de milieux.

7. Doigt de préhension (10) modulaire selon l'une quelconque des revendications précédentes, dans lequel les modules de base (12a, 12b) peuvent être reliés à force l'un à l'autre, avec l'interface de mâchoire électrique (108b) et avec l'interface de module d'extrémité (22b) électrique au moyen d'un système de changement rapide mécanique (108a, 16a, 18a, 22a).

8. Doigt de préhension (10) modulaire selon l'une quelconque des revendications précédentes, dans lequel au moins un capteur (24) et/ou au moins un actionneur (24) sont encastrés dans les modules de doigt (12a, 12b, 14, 14a, 14b) par intégration dans un module de fabrication additive.

9. Doigt de préhension (10) modulaire selon l'une quelconque des revendications précédentes, dans lequel les lignes de liaison (20) sont fabriquées dans un procédé de fabrication additive.

10. Doigt de préhension (10) modulaire selon l'une quelconque des revendications précédentes, dans lequel un capteur (24) est réalisé dans le module d'extrémité (14, 14a, 14b), de telle sorte que pour l'enregistrement de la force de préhension agissant sur la surface de préhension (30) la course de ressort d'un ressort (36) accouplé à la surface de préhension (30) est détectée.

11. Doigt de préhension (10) modulaire selon l'une quelconque des revendications précédentes, dans lequel le module d'extrémité (14, 14a, 14b) et le au moins un module de base (12a, 12b) sont réalisés de manière exempte d'unité d'évaluation.

12. Dispositif de préhension (100) avec une unité d'évaluation (110), avec au moins une mâchoire (102) présentant une interface de mâchoire (108) et avec au moins un doigt de préhension (10) modulaire selon l'une quelconque des revendications 1 à 10 disposé sur l'interface de mâchoire (108),
dans lequel l'unité d'évaluation (110) est intégrée dans le dispositif de préhension ou est disposée sur celui-ci, et
dans lequel les données de capteur du au moins un capteur (24) du au moins un doigt de préhension (10) produites lors du fonctionnement sont traitées par l'unité d'évaluation (110) .

13. Dispositif de préhension (100) selon la revendication 12, dans lequel le au moins un capteur (24) peut être relié à l'unité d'évaluation (110) au moyen de l'interface de mâchoire (108).

14. Kit de construction pour la fourniture d'un doigt de préhension (10) selon l'une quelconque des revendications 1 à 11 avec différents modules de doigt (12a, 12b, 14, 14a, 14b),
dans lequel les modules de doigt (12a, 12b, 14, 14a, 14b) sont prévus dans des formes, tailles et matériaux différents.
